# EUROPÄISCHE PATENTSCHRIFT

(11) **EP 3 023 324 B1**
(45) Veröffentlichungstag und Bekanntmachung des Hinweises auf die Patenterteilung: **16.08.2017**
(21) Anmeldenummer: 15195146.4
(22) Anmeldetag: 18.11.2015
(51) Int. Cl.: B62J 7/00, G01N 1/22

(54) **PORTABLER ABGASMESSKOFFER**
PORTABLE EXHAUST GAS MEASUREMENT CASE
COFFRET PORTATIF DE MESURE DE GAZ D'ÉCHAPPEMENT

(30) Priorität: 18.11.2014 DE 202014009111 U
(43) Veröffentlichungstag der Anmeldung: 25.05.2016
(73) Patentinhaber: MAHA-AIP GmbH & Co. KG, 87490 Haldenwang (DE)
(72) Erfinder: CURT, Michael, 87496 Untrasried (DE)
(74) Vertreter: MERH-IP Matias Erny Reichl Hoffmann Patentanwälte PartG mbB

(56) Entgegenhaltungen:
- EP-A2- 0 245 541
- WO-A1-03/104796
- AT-A2- 513 006

## Beschreibung

Die Erfindung betrifft eine Abgasmessvorrichtung mit einem portablen Abgasmesskoffer sowie eine Kopplungsvorrichtung zum Befestigen eines Abgasmesskoffers, die es ermöglichen, dass Abgasmessungen eines Kraftfahrzeuges während der Fahrt des Kraftfahrzeuges durchgeführt werden können. Der (Abgasmess-) Koffer ist zudem gewichtsreduziert, wasserdicht beziehungsweise spritzwassergeschützt und kann sich selbst mit elektrischer Energie versorgen.

Bisherige Lösungen zur mobilen Abgasmessung - wie die in AT 513 006 A2 offenbarte Abgasmessvorrichtung - sehen relativ große, sperrige Abgasmesskästen vor, die schwer sind und unter großem Arbeitsaufwand an einem Kraftfahrzeug mittels zusätzlicher Aufbauten befestigt werden müssen. Dadurch werden die Fahreigenschaften des Kraftfahrzeuges während der Prüfung beeinträchtigt. Die voluminösen bekannten Abgasmesskästen können nur schwer von einer Person getragen werden, und die Anbindung beziehungsweise Befestigung an einem Kraftfahrzeug ist umständlich und arbeitsaufwendig. Der fehlende Schutz vor Eindringen von Wasser und Staub verhindert zudem, dass Fahrzeugprüfungen auch während Regen oder in staubiger beziehungsweise schmutziger Umgebung durchgeführt werden können.

Es besteht somit Bedarf für einen von einer Person tragbaren, mit wenig Aufwand an einem Kraftfahrzeug montierbaren Abgasmesskoffer, der bei allen Wetterlagen eingesetzt werden kann, sowie für eine Vorrichtung zur schnellen, lösbaren und einfach realisierbaren Befestigung des Abgasmesskoffers mit einem Kraftfahrzeug.

Die EP 0 245 541 A2 zeigt ein an einem Motorradrahmen befestigbares, einteiliges Halterungsteil, wobei ein Motorradkoffer über eine entsprechende Aufnahme an einem bumerangförmigen Tragelement lösbar befestigt werden kann.

Diese Aufgabe wird v gemäß den Merkmalen des Anspruchs 1 gelöst. Bevorzugte Weiterentwicklungen werden in den abhängigen Ansprüchen beschrieben.

Die erfindungsgemäße Kopplungsvorrichtung zum Befestigen eines Abgasmesskoffers an einem Kraftfahrzeug kann einen Adapter aufweisen, der dazu eingerichtet ist, mit einer Aufnahme in Verbindung gebracht zu werden. Diese Aufnahme kann dazu geeignet sein, mit einem Abgasmesskoffer in Verbindung zu stehen. Es kann ein Verbindungselement vorgesehen sein, dass mit dem Adapter verbunden ist. Weiterhin kann eine Arretiereinrichtung vorgesehen sein, die dazu eingerichtet sein kann, eine lösbare Verbindung zwischen der Aufnahme und dem Adapter herzustellen. Das Verbindungselement kann dazu geeignet sein, mit dem Kraftfahrzeug in Verbindung zu stehen.

Durch das in Verbindung bringen des Adapters mit dem Verbindungselement und durch das Vorsehen der Aufnahme an dem Abgasmesskoffer kann dieser einfach und sicher an dem Kraftfahrzeug befestigt werden. Dazu kann unter anderem eine Arretiereinrichtung vorgesehen sein, die dazu eingerichtet sein kann, eine feste und lösbare Verbindung zwischen der Aufnahme und dem Adapter herzustellen.

Weiterhin kann dadurch, dass die Aufnahme und der Adapter in ihrer Form aufeinander abgestimmt sind, eine sichere und stabile Befestigung im eingeschobenen und eingerasteten Zustand erzielt werden.

Der Adapter kann zwei seitliche Führungen aufweisen, die einen Winkel zu einer Längsachse des Adapters aufweisen können. Die Führungen des Adapters sind dazu geeignet, einschiebbar in Eingriff mit der Aufnahme zu gelangen. Dadurch, dass die Aufnahme Einschuböffnungen aufweist, die in ihrer Form an die Führungen angepasst sind, kann eine sichere Verbindung hergestellt werden.

Die Aufnahme kann eine Rasteinrichtung aufweisen, die die Verbindung zwischen dem eingeschobenen Adapter und der Aufnahme lösbar fixiert.

Die Rasteinrichtung kann zumindest ein Hakenelement aufweisen, das in eine Öffnung des Adapters eingreifen kann.

Weiterhin können die Einschuböffnungen der Aufnahme mittels U-förmigen Einbuchtungen gebildet werden, wobei die Führungen des Adapters derart ausgebildet sein können, dass diese in die Einbuchtungen einschiebbar sind.

Durch die vorgenannte Ausbildung der Kopplungsvorrichtung ist ein einfaches Aufschieben des Koffers auf das mit dem Kraftfahrtzeug in Verbindung stehenden Verbindungselements möglich. Durch das Vorsehen der vorgenannten Rasteinrichtung kann zudem ein einfaches und sicheres Einrasten und somit eine Fixierung beider Elemente erzielt werden. Durch das zusätzliche Ausbilden der auf die Führungen abgestimmten Einbuchtungen der Aufnahme ist eine weitere Erhöhung der Fixierungssicherheit erzielbar.

Ferner kann die Kopplungsvorrichtung ein Verbindungselement umfassen, das mit dem Adapter verbunden sein kann. Das Verbindungselement kann eine Arretiereinrichtung umfassen, die dazu eingerichtet sein kann, eine lösbare Verbindung zwischen dem Verbindungselement und der Anhängerkupplung herzustellen.

Das Verbindungselement ist bevorzugt ein Hohlkörper, der beispielsweise verstellbare Klemmbacken oder dergleichen aufweist, die Teil der Arretiereinrichtung sein können. Beispielsweise können die Klemmbacken vorgesehen sein, um eine Anhängerkupplung fest umgreifen zu können. Der Adapter ist bevorzugt fest mit dem Verbindungselement verbunden, beispielsweise mittels einer Klebe- oder Schweißverbindung oder einer Schraubverbindung.

Der Adapter und das Verbindungselement können auch einteilig ausgeführt sein. Bevorzugt sind beide aus Metall gefertigt. Sie können jedoch auch aus Kunststoff hergestellt sein oder es können Metall- und Kunststoffteile kombiniert sein.

Zudem kann das Verbindungselement einen Hohlkörper aufweisen, an dem eine horizontal angeordnete Griffstange und ein Schraubgriff angeordnet sein kann. Die Arretiereinrichtung kann innerhalb des Hohlkörpers angeordnet sein, und mit der Arretiereinrichtung kann ein Endabschnitt einer Anhängerkupplung, zum Beispiel ein Kugelabschnitt, innerhalb des Hohlkörpers umgreifbar und arretierbar sein. Wie bereits erläutert wurde, kann die Arretiereinrichtung beispielsweise eine oder mehrere Klemmbacken umfassen, mit denen das Endstück einer Anhängerkupplung sicher umgriffen werden kann.

Der Adapter der Kupplungsvorrichtung weist bevorzugt eine solche Form auf, dass er mit einem Gegenstück an dem Abgasmesskoffer formschlüssig in Eingriff gebracht werden kann, sodass eine lösbare Verbindung zwischen dem Abgasmesskoffer und der Kupplungsvorrichtung hergestellt werden kann. Dies hat den Vorteil, dass der Abgasmesskoffer schnell und mit wenig Montageaufwand lösbar mit der Kupplungsvorrichtung verbunden werden kann. Die Verbindung zwischen einer Anhängerkupplung und der Kupplungsvorrichtung erlaubt zudem, dass der Abgasmesskoffer zuverlässig und ebenfalls mit geringem Montageaufwand an dem Fahrzeug befestigt werden kann.

Das Verbindungselement kann beispielsweise auch mit einem Motorrad in Verbindung stehen. Hierbei kann eine feste Verbindung des Verbindungselements mit einem Rahmen des Motorrads hergestellt werden. Der Abgasmesskoffer kann dann mittels dessen Aufnahme mit dem Adapter in Verbindung gebracht werden. Das Verbindungselement kann beispielsweise seitlich am Heckrahmen oder oben auf dem Heckrahmen angeordnet sein.

Die Herstellung der lösbaren Verbindung erfordert insbesondere deshalb einen geringen Montageaufwand, weil die beiden Gegenstücke, der Adapter der Kopplungseinrichtung und die Aufnahme des Abgasmesskoffers, lediglich ineinander geschoben werden müssen, um die Verbindung herzustellen.

Ferner können die Führungen des Adapters jeweils im Wesentlichen eine pfeilförmige oder dreieckige Grundfläche bedecken, wobei eine innere Fläche der Führungen ausgestanzt sein kann (sodass die äußeren Kanten "schienenförmig" ausgebildet sind). Die genannte bevorzugte Form der von den Führungen bedeckten Grundfläche ist deshalb technisch vorteilhaft, da eine in Einschubrichtung sich verjüngende Form, zum Beispiel eine Pfeilform oder eine dreieckige Form, bereits eine maximale Einschubtiefe beziehungsweise einen Einschubstopp in der Aufnahme des Abgasmesskoffers vorgeben. Es bedarf keiner weiteren Halte- oder Fixiermittel, um die Einschubposition in der Aufnahme zu sichern. Insbesondere gilt dies, wenn die Einschubrichtung des Adapters in die Aufnahme entgegen der Gewichtskraftrichtung des Abgasmesskoffers zeigt, da dann bereits die Gewichtskraft eine Positionssicherung ermöglicht. Die ausgeschnittene Grundfläche beziehungsweise die nicht vollständig von den schienenförmigen (Kanten-)Blechen bedeckte Grundfläche ist zudem im Hinblick auf eine Gewichtsersparnis vorteilhaft.

Ein erfindungsgemäßer Abgasmesskoffer kann eine Aufnahme umfassen, die dazu geeignet sein kann, einen Adapter einer Kopplungsvorrichtung gemäß einem der oben beschriebenen Aspekte und Beispiele aufzunehmen. Ferner kann der Abgasmesskoffer zumindest eine Messeinrichtung zur Analyse von Kraftfahrzeugabgasen, einen Kofferdeckel, der verschwenkbar mit einem Kofferkorpus verbunden sein kann und in einer geschlossenen Position in dieser arretierbar sein kann, und zumindest eine Dichtung, die im Bereich einer Fuge zwischen dem Kofferdeckel und dem Kofferkorpus angeordnet sein kann, aufweisen.

Die Messeinrichtungen können alle relevanten Abgasmessmethoden abdecken, wie zum Beispiel Partikelmessungen, CO2-Messungen, NOx-Messungen, etc.

Der Koffer hat zudem beispielsweise einen aufschwingbaren Kofferdeckel, der an einem oder zwei Gelenken mit dem Kofferkorpus befestigt ist. Ein möglicher Spalt zwischen dem Kofferdeckel und dem Kofferkorpus im geschlossenen Zustand wird mittels der umlaufenden Dichtung, die bevorzugt als ein Dichtring ausgeführt ist, abgeschlossen. Somit kann ein Spritzwasserschutz und/oder Wasserdichtigkeit erreicht werden. Der Koffer ist bevorzugt aus robustem, leichtem und wasserdichten Material wie Kunststoff oder Metall, besonders bevorzugt sind Kunststoffe wie PE, PP oder ABS.

Der Koffer ist folglich relativ leicht und über die Kopplungsvorrichtung mit wenig Aufwand zuverlässig und lösbar mit einem Fahrzeug verbindbar. Die Wasserdichtigkeit ermöglicht ferner das Durchführen von Testverfahren während Regen oder in staubigen Umgebungen.

Ferner kann der Abgasmesskoffer zumindest einen Anschluss für eine Abgasmesssonde und zumindest einen Abschluss für eine Datenleitung umfassen, sodass Messdaten und/oder Messproben zu den Messeinrichtungen im Inneren des Koffers geleitet werden können.

Ferner kann der Abgasmesskoffer Kühlrippenelemente und einen Tragegriff haben. Die Kühlrippenelemente können bevorzugt an den Kantenflächen des Koffers für eine effektive Kühlung sorgen, die insbesondere deshalb notwendig sein kann, da der Koffer eine sich erwärmende Batterie zur Elektrizitätsversorgung des Koffers enthalten kann und auch die Messeinrichtungen selbst sich erwärmen können.

Zusammengefasst wird hier ein relativ leichter und damit portabler Abgasmesskoffer beschrieben, den eine einzelne Person mit geringem Aufwand mittels der Kopplungsvorrichtung mit einem Fahrzeug verbinden kann. Die Wasserdichtigkeit ermöglicht auch das Durchführen von Testverfahren während Regen oder in staubigen Umgebungen.

Die hier dargelegte Vorrichtung und der Abgasmesskoffer werden im Folgenden exemplarisch mit Bezug auf die beigefügten, schematischen Zeichnungen beschrieben.

Es zeigen:
- **Figur 1**: eine perspektivische Darstellung eines Abgasmesskoffers und eines Verbindungselements;
- **Figur 2**: eine Rückansicht eines Abgasmesskoffers;
- **Figur 3**: eine perspektivische Ansicht des Abgasmesskoffers;
- **Figur 4**: ein an einem Personenkraftwagen angeordneter Abgasmesskoffer; und
- **Figur 5**: einen an einem Motorrad angeordneten Abgasmesskoffer in einer Seiten- und einer Rückansicht.

Im Folgenden werden verschiedene Beispiele detailliert und unter Bezugnahme auf die Figuren beschrieben. Gleiche beziehungsweise ähnliche Elemente in den Figuren werden hierbei mit gleichen Bezugszeichen bezeichnet. Die vorliegenden Vorrichtungen sind jedoch nicht auf die beschriebenen Kombinationen von Merkmalen begrenzt. Vielmehr sollen auch weitere Modifikationen und Kombinationen von Merkmalen verschiedener Beispiele im Rahmen des Schutzumfangs der unabhängigen Ansprüche umfasst sein.

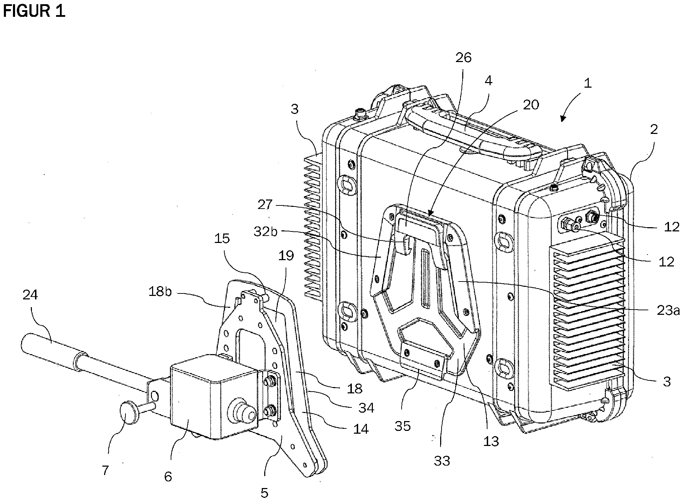

In der **Figur 1** ist ein Abgasmesskoffer 1 mit einem geschlossenen Kofferdeckel 2 dargestellt. Seitlich weist der gezeigte Koffer zwei Kühlrippenmodule 3 auf, die die Wärme, die im Inneren des Koffers erzeugt wird, effektiv an die Umgebungsluft ableiten können. Ferner weist der Koffer 1 einen Tragegriff 4 auf. Der dargestellte Koffer 1 ist möglichst leichtgewichtig ausgebildet und wiegt beispielsweise bevorzugt maximal 17 bis 18 kg inklusive Inhalt, wie zum Beispiel Messeinrichtungen.

Weiterhin ist ein Verbindungselement 5, 6, 7, 24 beispielhaft dargestellt. Das Verbindungselement enthält eine Anschlussplatte 5, die mit einem Hohlkörper 6 in Verbindung steht. Dieser Hohlkörper 6 kann rechteckig oder quadratisch ausgeführt werden. In diesem Hohlkörper 6 kann beispielsweise eine Einstellschraube beziehungsweise ein Schraubgriff 7 eingeführt werden, um beispielsweise eine Arretiereinrichtung innerhalb des Hohlkörpers 6 anziehen zu können oder lösen zu können. Der Hohlkörper 6 ist hierbei derart ausgebildet, dass beispielsweise ein Kugelkopf (nicht dargestellt) einer Anhängevorrichtung 36 eines Kraftfahrzeuges 25 aufgenommen und lösbar festgelegt werden kann.

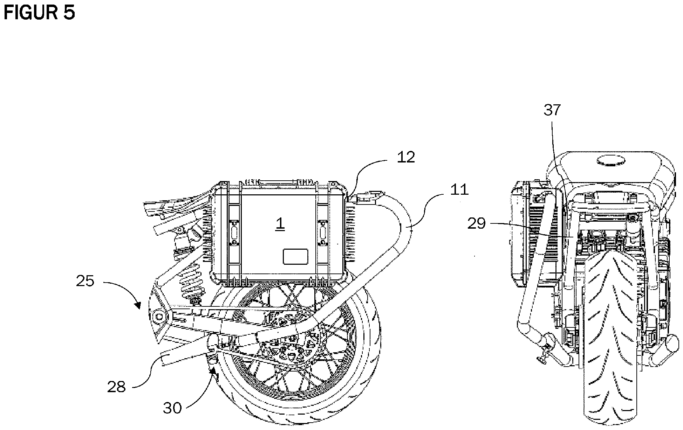

Wie beispielsweise in **Figur 5** dargestellt ist, kann das Verbindungselement auch mit einem Rahmen 29 eines Motorrads in Verbindung gebracht werden. Die Verbindung beispielsweise der Anschlussplatte 5 mit dem Rahmen 29 des Motorrads erfolgt derart, dass anschließend der Abgasmesskoffer problemlos befestigt werden kann.

Der Koffer 1 weist weiterhin einen Kofferkorpus 8 auf, auf dem der Kofferdeckel 2 verschlossen aufliegt. In einem Spalt zwischen dem Kofferkorpus 8 und dem Kofferdeckel 2 ist eine Dichtung gegen das Eindringen von Staub und Wasser angeordnet.

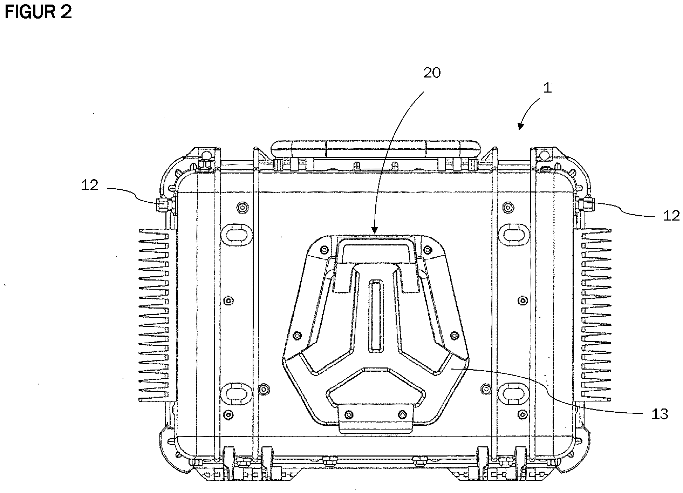

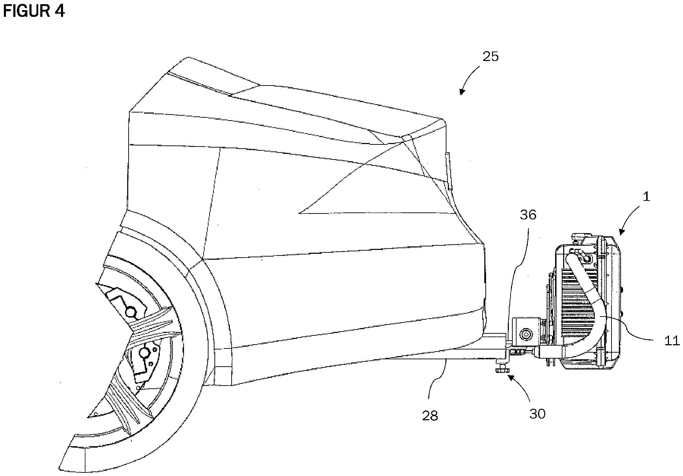

Weiterhin sind Anschlüsse 12 gezeigt, die als Signal- und/oder Datenleitungsanschlüsse und/oder als Probeneinlass beziehungsweise -auslass ausgelegt werden können. Wie in **Figur 2** dargestellt ist, können diese Anschlüsse auf beiden Seiten des Koffers vorgesehen sein. Wie beispielsweise in den **Figuren 4** **und** **5** dargestellt ist, kann eine Probenleitung 11 von dem Anschluss 12 zu einem Abgasauslass 28 des Kraftfahrzeuges 25 geführt sein, um Abgase zur Messung in dem Koffer 1 zu den darin angeordneten Messeinrichtungen zu leiten. Die Probenleitung 11 kann hierzu durch eine Klemmeinrichtung 30 an dem Abgasauslass 28 befestigt sein.

In dem Abgasmesskoffer 1 können neben diversen Messeinheiten für Gas- und Partikelmessungen auch Wetterstationen, ein GPS-Sender/- Empfänger und/oder ein Network Interface zur Verbindung eines innerhalb des Koffers 1 angeordneten Rechners mit dem Bordnetz eines Kraftfahrzeuges vorgesehen sein. Das GPS erlaubt es beispielsweise, dass eine während eines Prüfverfahrens zurückgelegte Fahrtstrecke nachvollzogen werden kann. Das Interface ermöglicht es beispielsweise, dass Messdaten über das Bordnetz beziehungsweise einer Internetanschluss des Kraftfahrzeuges bereits während der Fahrt ausgelesen werden oder verarbeitet werden können. Weiterhin können über die Datenleitung zum Bordnetz des Fahrzeuges auch die Fahrzeugdaten während der Prüfverfahren aufgezeichnet und beispielsweise vom Rechner in dem Koffer und/oder dem Bordrechner des Fahrzeuges ausgewertet werden, um diese mit den Messdaten für die Abgasmessungen abzugleichen. Zudem kann auch eine Vielzahl von Probeneingängen 12 vorgesehen sein beziehungsweise mehrere Messsondenanschlüsse 12, damit zum Beispiel Fahrzeuge mit mehreren Abgasauslässen 28 getestet werden können.

Die **Figur 2** zeigt eine Rückansicht des Abgasmesskoffers 1. Über Schrauben kann hierbei eine Aufnahme 13 mit der Rückseite des Abgasmesskoffers 1 verbunden sein. Die Aufnahme 13 weist eine Rasteinrichtung 20 auf. Diese Rasteinrichtung 20 ist beweglich mit der Aufnahme 13 derart verbunden, dass diese über eine nicht dargestellte Feder im nicht eingerasteten Zustand an der Unterseite mit den Hakenelementen 27 nach innen (in Richtung des Koffers) gedrückt wird. Dadurch ist es möglich, dass dann, wenn der Koffer 1 mit der Aufnahme 13 über den Adapter 14 geschoben wird, die Hakenelemente 27 in die Öffnung 19 eingreifen beziehungsweise einrasten können. Die Rasteinrichtung 20 kann hierbei über einen Rasthebel 26 betätigt werden, wobei durch Druck auf den Rasthebel 26 die Hakenelemente 27 gegen eine Federkraft nach außen bewegt werden.

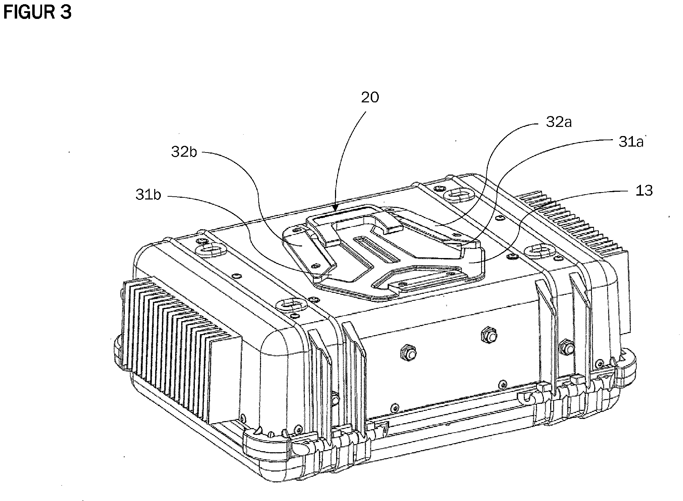

Wie in **Figur 3** dargestellt, weist die Aufnahme 13 weist Einschuböffnungen 31a, 31b auf, die in ihrer Form an Führungen 18a, 18b des Adapters 14 angepasst sind. Diese Einschuböffnungen 31a, 31b können mittels U-förmiger Einbuchtungen 32a, 32b gebildet sein. Die Ausbildung der Einschuböffnungen 31a, 31b ist an die Ausbildung der Führungen 18a, 18b derart angepasst, dass ein Einschieben beziehungsweise Aufschieben der Aufnahme 13 mit dem daran angeordneten Messkoffer 1 bis zur Rastposition (unter anderem über die Hakenelemente 27) zu einer festen und sicheren Verbindung beider Elemente führt. Wie in den **Figuren 1****,** **2****, und** **3** gezeigt, weisen die Führungen 18a, 18b zu einer gedachten Längsachse des Adapters 14 einen entsprechenden Winkel auf. Die Einschuböffnungen 31a, 31b beziehungsweise die Einbuchtungen 32a, 32b in der Aufnahme 13 weisen einen entsprechenden Winkel auf, sodass es zu der schon zuvor beschriebenen sicheren und formschlüssigen Verbindung beider Elemente führen kann. Die Aufnahme 13 weist weiterhin eine Gleitfläche 33 auf. Beim Aufschieben der Aufnahme 13 über den Adapter 14 bewegt sich diese Gleitfläche entlang einer Anlage 34 des Adapters 14. Die Dicke des Adapters 14 ist auf die Höhe der Einschuböffnung 31a, 31b beziehungsweise der Einbuchtungen 32a, 32b angepasst, um einen sicheren Halt im eingeschobenen Zustand zu gewährleisten. Die Aufnahme 13 weist weiterhin einen Anschlag 35 auf, der in aufgeschobenem Zustand mit einer inneren Unterseite des Adapters 14 in Kontakt kommen kann (nicht dargestellt). Diese innere Seite kann an der Unterseite der Öffnung 19 ausgebildet sein.

Zusammengefasst hat die Erfindung unter anderem die technischen Vorteile, dass der Abgasmesskoffer wasserdicht und robust ist (zum Beispiel nach IP67), kompakte Außenabmessungen aufweist und leicht ist, wobei inklusive der integrierten Batterie das Gewicht bei beispielsweise maximal ca. 17 bis 18 kg liegen kann. Die Montage des Abgasmesskoffers 1 mittels der Verbindung zwischen der Aufnahme 13 und dem Adapter 14 und beispielsweise einer Anhängerkupplung 36 eines Kraftfahrzeuges 25 kann schnell ohne größeren Montageaufwand durchgeführt werden. Der Abgasmesskoffer 1 kann sich während der Fahrt oder des laufenden Prüfverfahrens über eine Batterie beziehungsweise einen Akkumulator (zum Beispiel Lithium-Ionen) selbst mit elektrischer Energie versorgen. Somit kann der Abgasmesskoffer 1 beispielsweise für die Ermittlung des Kraftstoffverbrauchs während einer realen Fahrt herangezogen werden, selbst bei schlechtem Wetter, wie zum Beispiel Regen. Im Falle einer autarken Energieversorgung des Abgasmesskoffers 1 zieht dieser auch aus der Fahrzeugversorgung keine elektrische Energie, sodass hierbei keine Beeinflussung der realen Verhältnisse erfolgt.

## Patentansprüche

1. Abgasmessvorrichtung mit einem Abgasmesskoffer (1) und einer Kopplungsvorrichtung zum Befestigen des Abgasmesskoffers (1) an einem Kraftfahrzeug (25),
mit
- einem Adapter (14), der dazu eingerichtet ist, mit einer Aufnahme (13) in Verbindung gebracht zu werden, wobei die Aufnahme (13) dazu geeignet ist, mit dem Abgasmesskoffer (1) in Verbindung zu stehen, und
- einem Verbindungselement (5, 6,7, 24, 37), das mit dem Adapter (14) verbunden ist, und
- einer Rasteinrichtung (20), die dazu eingerichtet ist, eine lösbare Verbindung zwischen der Aufnahme (13) und dem Adapter (14) herzustellen, wobei das Verbindungselement (5, 6, 7, 24) dazu geeignet ist, mit dem Kraftfahrzeug (25) in Verbindung zu stehen.

2. Abgasmessvorrichtung gemäß Anspruch 1, **gekennzeichnet dadurch, dass** zwischen einem Halteelement (5) und dem Adapter (14) Abstandselemente (15) vorgesehen sind.

3. Abgasmessvorrichtung gemäß zumindest einem der voranstehenden Ansprüche, **gekennzeichnet dadurch, dass** der Adapter (14) zwei seitliche Führungen (18a, 18b) aufweist, die einen vorbestimmten Winkel zur Längsachse des Adapters (14) bilden.

4. Abgasmessvorrichtung gemäß zumindest einem der voranstehenden Ansprüche, **gekennzeichnet dadurch, dass** die Führungen (18a, 18b) des Adapters (14) dazu geeignet sind, einschiebbar in Eingriff mit der Aufnahme (13) gebracht zu werden.

5. Abgasmessvorrichtung gemäß zumindest einem der voranstehenden Ansprüche, **gekennzeichnet dadurch, dass** die Aufnahme (13) jeweilige Einschuböffnungen (31a, 31b) aufweist, die in ihrer Form an die Führungen (18a, 18b) angepasst sind.

6. Abgasmessvorrichtung gemäß zumindest einem der voranstehenden Ansprüche, **gekennzeichnet dadurch, dass** die Einschuböffnungen (31a, 31b) mittels U-förmigen Einbuchtungen (32a, 32b) an der ersten Aufnahme (13) gebildet werden, wobei die Führungen (18a, 18b) derart ausgebildet sind, dass diese in die Einbuchtungen (30a, 30b) einschiebbar sind.

7. Abgasmessvorrichtung gemäß zumindest einem der voranstehenden Ansprüche, **gekennzeichnet dadurch, dass** die Aufnahme (13) die Rasteinrichtung (20) aufweist, die die Verbindung zwischen dem eingeschobenen Adapter (14) und der Aufnahme (13) lösbar fixiert.

8. Abgasmessvorrichtung gemäß zumindest einem der voranstehenden Ansprüche, **gekennzeichnet dadurch, dass** die Rasteinrichtung (20) zumindest ein Hakenelement (27) aufweist, das lösbar in eine Öffnung (19) des Adapters (14) eingreift.

9. Abgasmessvorrichtung gemäß zumindest einem der voranstehenden Ansprüche, **gekennzeichnet dadurch, dass** das Kraftfahrzeug (25) ein Motorrad ist und das Verbindungselement (37) mit einem Rahmen (29) des Motorrads in Verbindung bringbar ist oder dass das Kraftfahrzeug (25) ein Personenkraftwagen oder Lastkraftwagen ist und das Verbindungselement (5, 6, 7, 24) mit einer Anhängerkupplung (36) in Verbindung bringbar ist.

10. Abgasmessvorrichtung nach Anspruch 1 mit
- einer Aufnahme (13), die dazu geeignet ist, einen Adapter (14) einer Kopplungsvorrichtung gemäß zumindest einem der voranstehenden Ansprüche aufzunehmen,
- zumindest einer Messeinrichtung zur Analyse von Kraftfahrzeugabgasen,
- einem Kofferdeckel (2), der verschwenkbar mit einem Kofferkorpus (8) verbunden ist und in einer geschlossenen Position in dieser arretierbar ist, und
- zumindest einer Dichtung, die im Bereich einer Fuge zwischen dem Kofferdeckel (2) und dem Kofferkorpus (8) angeordnet ist.

11. Abgasmessvorrichtung gemäß Anspruch 1, **gekennzeichnet dadurch, dass** der Abgasmesskoffer (1) zumindest einen Anschluss (12) für eine Abgasmesssonde und/oder zumindest einen Abschluss (12) für eine Datenleitung aufweist.

12. Abgasmessvorrichtung gemäß Anspruch 1, **gekennzeichnet dadurch, dass** der Abgasmesskoffer (1) Kühlrippenelemente (3) und/oder einen Tragegriff (4) aufweist.

## Claims

1. An exhaust gas measuring device including an exhaust gas measuring case (1) and a coupling device for mounting said exhaust gas measuring case (1) to a motor vehicle (25),
comprising
- an adapter (14) configured to be coupled to a receptacle (13), wherein said receptacle (13) is adapted to be connected to said exhaust gas measuring case (1), and
- a connecting element (5, 6.7, 24, 37) connected to said adapter (14), and
- a locking means (20) adapted to establish a releasable connection between said receptacle (13) and said adapter (14), wherein said connecting element (5, 6, 7, 24) is adapted to be connected to said motor vehicle (25).

2. The exhaust gas measuring device according to claim 1, **characterized in that** spacer elements (15) are provided between a retaining element (5) and said adapter (14).

3. The exhaust gas measuring device according to at least one of the preceding claims, **characterized in that** said adapter (14) has two lateral guides (18a, 18b) which form a predetermined angle with respect to the longitudinal axis of said adapter (14).

4. The exhaust gas measuring device according to at least one of the preceding claims, **characterized in that** said guides (18a, 18b) of said adapter (14) are adapted to be insertably engaged with said receptacle (13).

5. The exhaust gas measuring device according to at least one of the preceding claims, **characterized in that** said receptacle (13) has respective insertion openings (31a, 31b), the shape of which is matched to said guides (18a, 18b).

6. The exhaust gas measuring device according to at least one of the preceding claims, **characterized in that** said insertion openings (31a, 31b) are formed by means of U-shaped indentations (32a, 32b) on said first receptacle (13), wherein said guides (18a, 18b) are formed such that they are insertable into said indentations (30a, 30b).

7. The exhaust gas measuring device according to at least one of the preceding claims, **characterized in that** said receptacle (13) includes said locking means (20) which releasably fixes the connection between the inserted adapter (14) and said receptacle (13).

8. The exhaust gas measuring device according to at least one of the preceding claims, **characterized in that** said locking means (20) comprises at least one hook element (27) which engages releasably with an opening (19) of said adapter (14).

9. The exhaust gas measuring device according to at least one of the preceding claims, **characterized in that** said motor vehicle (25) is a motorcycle and said connecting element (37) can be coupled to a frame (29) of said motorcycle or that said motor vehicle (25) is a passenger car or a truck and said connecting element (5, 6, 7, 24) can be coupled to a trailer coupling (36).

10. The exhaust gas measuring device (1) according to claim 1, comprising
- a receptacle (13) adapted to receive an adapter (14) of a coupling device according to at least one of the preceding claims,
- at least one measuring device for the analysis of motor vehicle exhaust gases,
- a case lid (2) pivotally connected to a case body (8) and lockable in place in a closed position, and
- at least one sealing arranged in the region of a joint between said case lid (2) and said case body (8).

11. The exhaust gas measuring device according to claim 1, **characterized in that** said exhaust gas measuring case (1) has at least one port (12) for an exhaust gas measuring probe and/or at least one terminal (12) for a data line.

12. The exhaust gas measuring device according to claim 1, **characterized in that** said exhaust gas measuring case (1) includes cooling fin elements (3) and/or a carrying handle (4).

## Revendications

1. Dispositif de mesure de gaz d'échappement, comportant un coffret de mesure de gaz d'échappement (1) et un moyen de couplage pour fixer le coffret de mesure de gaz d'échappement (1) sur un véhicule automobile (25),
comportant
- un adaptateur (14) conçu pour être mis en liaison avec un logement (13), le logement (13) étant apte à être en liaison avec le coffret de mesure de gaz d'échappement (1), et
- un élément de liaison (5, 6, 7, 24, 37) qui est relié à l'adaptateur (14), et
- un dispositif d'enclenchement (20) qui est conçu pour établir une liaison détachable entre le logement (13) et l'adaptateur (14), l'élément de liaison (5, 6, 7, 24) étant apte à être en liaison avec le véhicule automobile (25).

2. Dispositif de mesure de gaz d'échappement selon la revendication 1, **caractérisé en ce que** des éléments écarteurs (15) sont prévus entre un élément de maintien (5) et l'adaptateur (14).

3. Dispositif de mesure de gaz d'échappement selon l'une au moins des revendications précédentes, **caractérisé en ce que** l'adaptateur (14) comprend deux guidages latéraux (18a, 18b) qui définissent un angle prédéterminé par rapport à l'axe longitudinal de l'adaptateur (14).

4. Dispositif de mesure de gaz d'échappement selon l'une au moins des revendications précédentes, **caractérisé en ce que** les guidages (18a, 18b) de l'adaptateur (14) sont aptes à mis en engagement avec le logement (13) par insertion.

5. Dispositif de mesure de gaz d'échappement selon l'une au moins des revendications précédentes, **caractérisé en ce que** le logement (13) présente des ouvertures d'insertion respectives (31 a, 31 b) ayant une forme adaptée aux guidages (18a, 18b).

6. Dispositif de mesure de gaz d'échappement selon l'une au moins des revendications précédentes, **caractérisé en ce que** les ouvertures d'insertion (31 a, 31 b) sont formées par des échancrures en forme de U (32a, 32b) sur le premier logement (13), les guidages (18a, 18b) étant réalisés de manière à pouvoir être insérés dans les échancrures (30a, 30b).

7. Dispositif de mesure de gaz d'échappement selon l'une au moins des revendications précédentes, **caractérisé en ce que** le logement (13) comprend le moyen d'enclenchement (20) qui fixe de façon détachable la liaison entre l'adaptateur (14) inséré et le logement (13).

8. Dispositif de mesure de gaz d'échappement selon l'une au moins des revendications précédentes, **caractérisé en ce que** le moyen d'enclenchement (20) comprend au moins un élément formant crochet (27) qui vient s'engager de façon détachable dans une ouverture (19) de l'adaptateur (14).

9. Dispositif de mesure de gaz d'échappement selon l'une au moins des revendications précédentes, **caractérisé en ce que** le véhicule automobile (25) est une motocyclette et **en ce que** l'élément de liaison (37) est susceptible d'être mis en liaison avec un cadre (29) de la motocyclette ou **en ce que** le véhicule automobile (25) est une voiture particulière ou un camion et l'élément de liaison (5, 6, 7, 24) est susceptible d'être mis en liaison avec un attelage de remorque (36).

10. Dispositif de mesure de gaz d'échappement selon la revendication 1, comprenant
- un logement (13) apte à recevoir un adaptateur (14) d'un moyen de couplage selon l'une au moins des revendications précédentes,
- au moins un dispositif de mesure pour analyser des gaz d'échappement de véhicule automobile,
- un couvercle de coffret (2) qui est relié en pivotement à un corps de coffret (8) et qui, dans une position fermée, peut être arrêté dans celle-ci, et
- au moins un joint d'étanchéité qui est agencé dans la zone d'une jointure entre le couvercle de coffret (2) et le corps de coffret (8).

11. Dispositif de mesure de gaz d'échappement selon la revendication 1, **caractérisé en ce que** le coffret de mesure de gaz d'échappement (1) comprend au moins un raccord (12) pour une sonde de mesure de gaz d'échappement et/ou au moins un raccord (12) pour une ligne de données.

12. Dispositif de mesure de gaz d'échappement selon la revendication 1, **caractérisé en ce que** le coffret de mesure de gaz d'échappement (1) comprend des éléments formant ailettes de refroidissement (3) et/ou une poignée de transport (4).
